# FASCICULE DE BREVET EUROPEEN

(11) **EP 3 433 910 B1**
(45) Date de publication et mention de la délivrance du brevet: **18.12.2019**
(21) Numéro de dépôt: 17711231.5
(22) Date de dépôt: 21.03.2017
(51) Int. Cl.: H01S 3/042, H01S 3/04, H01S 3/08, H01S 3/10, H01S 3/06, H01S 3/0941, H01S 3/16

(54) **DISPOSITIF D'AMPLIFICATION LASER À CONTRÔLE ACTIF DE LA QUALITÉ DE FAISCEAU**
LASERVERSTÄRKERVORRICHTUNG MIT AKTIVER STEUERUNG DER STRAHLQUALITÄT
LASER-AMPLIFYING DEVICE WITH ACTIVE CONTROL OF BEAM QUALITY

(30) Priorité: 21.03.2016 FR 1652393
(43) Date de publication de la demande: 30.01.2019
(73) Titulaire: Commissariat à l'énergie atomique et aux énergies alternatives, 75015 Paris (FR); Centre Technologique Alphanov, 33400 Talence (FR)
(72) Inventeur: JOLLY, Alain, 33510 Andernos (FR)
(74) Mandataire: Brevalex
(86) Numéro de dépôt international: PCT/EP2017/056615
(87) Numéro de publication internationale: WO 2017/162621

(56) Documents cités:
- JP-A- H05 226 732
- US-A- 6 034 977
- US-A- 6 134 258
- US-A1- 2004 258 123
- US-A1- 2006 109 878

## Description

### DOMAINE TECHNIQUE

L'invention concerne le domaine des dispositifs d'amplification laser, comprenant un milieu amplificateur configuré pour amplifier un faisceau laser incident, lorsqu'il est pompé optiquement par une ou plusieurs diodes laser ou empilements de diodes laser.

Dans tout le texte, le faisceau laser incident est nommé faisceau laser à amplifier, et le faisceau après amplification est nommé faisceau laser amplifié.

L'invention concerne plus particulièrement un dispositif d'amplification laser offrant un contrôle actif de la qualité de faisceau, c'est-à-dire présentant des moyens actifs pour éviter de dégrader la qualité optique du faisceau laser amplifié.

Ces moyens sont dits actifs, car peuvent être actionnés ou éteints.

L'invention concerne plus particulièrement un dispositif d'amplification laser, dans lequel le milieu amplificateur se présente sous la forme d'une plaque plus ou moins épaisse (ou « *slab* », en anglais), dite plaque amplificatrice.

### ÉTAT DE LA TECHNIQUE ANTÉRIEURE

Dans un tel dispositif, la puissance du faisceau des diodes de pompage doit être confinée à l'intérieur de la plaque amplificatrice.

Dans le cas de milieux amplificateurs dits « à trois niveaux», cette intensité peut devoir être rendue supérieure à un seuil prédéterminé, dit seuil de transparence, de sorte que la puissance de pompage doit être très fortement confinée dans un petit volume.

Dans le cas des autres milieux amplificateurs, ne présentant pas de seuil (dits « à quatre niveaux »), le besoin de confinement est moindre, mais demeure.

Une conséquence directe de la forte densité de puissance de pompage dans la plaque est un échauffement, potentiellement très significatif.

Cet échauffement provoque l'apparition de gradients de température, qui se développent à l'intérieur de la plaque amplificatrice.

Ces gradients de température se traduisent tout d'abord par une répartition non homogène des valeurs d'indice optique de la plaque amplificatrice, ce qui nuit à la qualité optique du faisceau laser amplifié. Ces gradients sont définis par un coefficient de variation de l'indice optique de la plaque amplificatrice en fonction de la température.

Cette première conséquence de l'échauffement est nommée effet thermo-optique.

Cet échauffement provoque également l'apparition de déformations mécaniques au niveau des faces de la plaque amplificatrice, contribuant également à dégrader la surface d'onde du faisceau laser amplifié. Cette seconde conséquence de l'échauffement est nommée effet thermo-mécanique.

On connaît dans l'art antérieur des dispositifs d'amplification laser comprenant des moyens de refroidissement, pour limiter l'échauffement à l'intérieur de la plaque amplificatrice, et donc les conséquences de cet échauffement sur la qualité optique du faisceau laser amplifié.

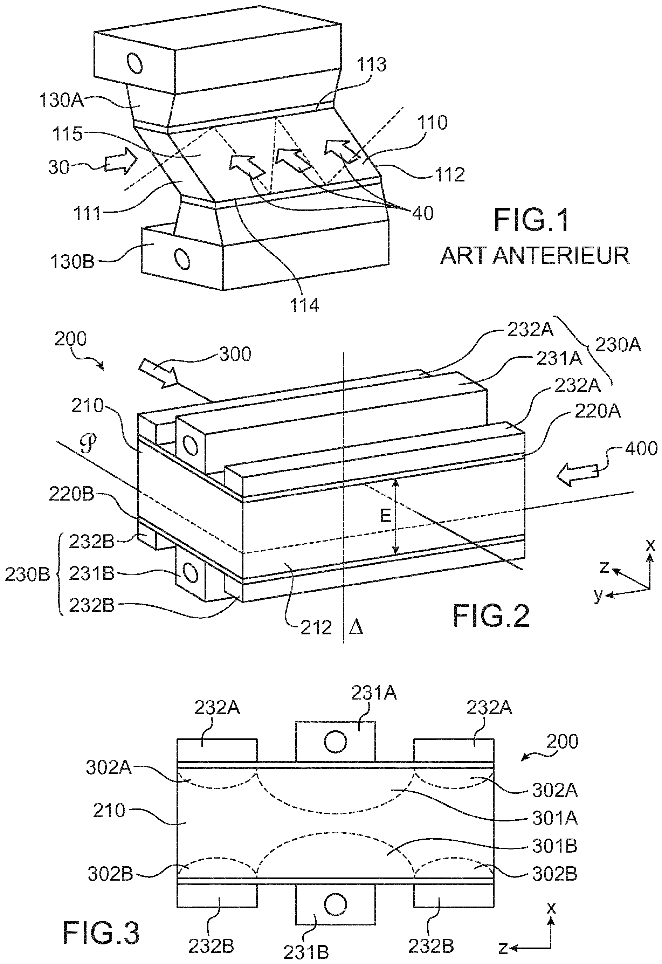

Le document US-6,134,258 illustre un exemple d'un tel dispositif, dans lequel on trouve une plaque amplificatrice 110, représentée ici en figure 1, qui comprend une face d'entrée 111, pour l'entrée d'un faisceau laser incident, à amplifier, et une face de sortie 112, pour la sortie dudit faisceau après traversée de la plaque, toutes deux inclinées à l'angle de Brewster.

Le document EP 1 492 207 montre un dispositif laser, comprenant une plaque amplificatrice disposant d'un système de contrôle de la température (chauffage et refroisissement).

A l'intérieur de la plaque amplificatrice 110, le faisceau laser incident 30, à amplifier, se propage en zigzag, par réflexions successives sur une face supérieure 113 et une face inférieure 114 de la plaque amplificatrice (voir traits en pointillés). Les faces supérieure et inférieure sont recouvertes chacune d'un revêtement réfléchissant.

La plaque amplificatrice 110 est pompée ici de façon transverse, par des faisceaux de pompe 40 injectés dans la plaque amplificatrice depuis une face 115 de celle-ci.

La plaque amplificatrice 110 est refroidie au niveau de ses faces supérieure et inférieure, grâce à des éléments de refroidissement respectifs 130A, 130B.

Les deux éléments de refroidissement 130A, 130B sont identiques.

Chaque élément de refroidissement 130A, 130B est constitué d'un bloc métallique, au sein duquel circule un liquide de refroidissement tel que de l'eau, généralement à température ambiante (environ 300 K).

Ces éléments de refroidissement améliorent la qualité optique du faisceau laser amplifié, en réduisant la température moyenne dans la plaque amplificatrice.

En pratique, on observe cependant toujours une forte dégradation de la qualité optique du faisceau laser, après amplification par la plaque amplificatrice.

En outre, cette solution impose l'utilisation d'une plaque amplificatrice d'épaisseur réduite, offrant donc une section réduite pour l'injection du faisceau laser à amplifier, et ne donnant alors accès qu'à des impulsions laser amplifiées de faible énergie.

Un objectif de la présente invention est de proposer des moyens de contrôle actif de la qualité optique d'un faisceau laser amplifié, pouvant offrir un meilleur contrôle de la qualité optique du faisceau laser amplifié que dans l'art antérieur.

Un autre but de la présente invention est de proposer des moyens de contrôle actif de la qualité optique d'un faisceau laser amplifié, permettant d'utiliser une plaque amplificatrice d'épaisseur accrue, pour une même qualité optique du faisceau laser amplifié.

En particulier, un but de la présente invention est de proposer des moyens de contrôle actif de la qualité optique d'un faisceau laser amplifié, permettant d'utiliser une plaque amplificatrice d'épaisseur supérieure à 2 mm, une telle épaisseur permettant de générer des impulsions laser amplifiées à haute énergie sans dégrader notablement la qualité optique du faisceau laser durant l'amplification.

### EXPOSÉ DE L'INVENTION

Cet objectif est atteint avec un dispositif d'amplification laser, comprenant une plaque amplificatrice présentant une face latérale d'entrée et une face latérale de sortie pour un faisceau laser à amplifier, et dont les faces supérieure et inférieure sont chacune recouvertes d'un système de contrôle de la température respectif, comme défini dans la revendication 1. Les revendications dépendantes définissent des dispositions constructives supplémentaires.

Selon l'invention, chaque système de contrôle de la température comprend un élément de refroidissement, recouvrant une région centrale de la face supérieure, respectivement inférieure de la plaque amplificatrice, et au moins un élément de chauffage, recouvrant des régions périphériques de la face supérieure, respectivement inférieure de la plaque amplificatrice.

En outre, les systèmes de contrôle de la température selon l'invention sont sensiblement symétriques l'un de l'autre, selon une symétrie orthogonale par rapport à un plan *P* traversant la plaque amplificatrice.

Le plan *P* est un plan parallèle aux faces supérieure et inférieure de la plaque amplificatrice.

Sensiblement symétrique signifie que chaque système de contrôle de la température présentant un taux de recouvrement supérieur à 90% avec le symétrique de l'autre système de contrôle de la température, voire supérieur à 95% ou même 98%.

Les deux éléments de refroidissement permettent de limiter un échauffement global de la plaque amplificatrice.

De façon surprenante, les éléments de chauffage permettent d'obtenir une qualité optique accrue du faisceau laser amplifié dans la plaque amplificatrice.

Lorsque le pompage du faisceau laser à amplifier est mis en oeuvre et que les éléments de chauffage et de refroidissement sont actionnés, ces éléments de chauffage et de refroidissement combinés permettent de créer à l'intérieur de la plaque amplificatrice, une nouvelle répartition des températures.

Les éléments de chauffage permettent notamment d'agir localement sur la forme des surfaces isothermes qui se développent à l'intérieur de la plaque amplificatrice, afin de combattre les effets néfastes des gradients naturels de température dus au refroidissement, nécessaire, de la plaque amplificatrice.

Cette action locale sur les gradients de température est mise en oeuvre à l'aide de systèmes de contrôle de la température symétriques l'un de l'autre, ce qui permet de moduler une répartition des températures locales à l'intérieur de la plaque amplificatrice, de façon à limiter une dégradation de la qualité de surface d'onde d'un faisceau laser à amplifier se propageant en ligne droite entre la face d'entrée et la face de sortie de la plaque amplificatrice.

En particulier, on peut moduler les répartitions des températures locales à l'intérieur de la plaque amplificatrice, et donc les indices optiques locaux à l'intérieur de la plaque amplificatrice, de sorte que chaque point de la surface d'onde d'un faisceau laser à amplifier ait parcouru, après une ou plusieurs traversées en ligne droite à l'intérieur de la plaque amplificatrice, sensiblement la même valeur de chemin optique.

Le faisceau après la ou les traversée(s) en ligne droite à l'intérieur de la plaque amplificatrice forme le faisceau laser amplifié.

La différence de chemin optique entre deux points de la surface d'onde du faisceau laser amplifié peut être sensiblement nulle, inférieure à un dixième de la longueur d'onde dudit faisceau laser.

En variante, on peut moduler les répartitions des températures locales à l'intérieur de la plaque amplificatrice, et donc les indices optiques locaux à l'intérieur de la plaque amplificatrice, de sorte que chaque point de la surface d'onde d'un faisceau laser ait parcouru, après une ou plusieurs traversées en ligne droite à l'intérieur de la plaque amplificatrice, une valeur maîtrisée de chemin optique. Les valeurs de chemin optique associées à chaque point de la surface d'onde du faisceau laser amplifié correspondent ensemble à une déformation connue de cette surface d'onde, en particulier une déformation sensiblement cylindrique ou sphérique.

La différence de chemin optique entre deux points de la surface d'onde du faisceau laser amplifié correspond alors à une surface sensiblement sphérique, respectivement cylindrique, comprise entre deux surfaces sphériques, respectivement cylindriques dont les rayons diffèrent de moins d'un dixième de la longueur d'onde dudit faisceau laser.

En variante, la déformation correspond sensiblement à deux déformations cylindriques selon des axes orthogonaux.

La différence de chemin optique entre deux points de la surface d'onde du faisceau laser amplifié correspond alors à une surface asphérique, comprise entre deux surfaces asphériques définies chacune par deux cylindres d'axe orthogonaux, les rayons des cylindres différant deux à deux de moins d'un dixième de la longueur d'onde dudit faisceau laser.

L'invention offre donc un moyen nouveau et inventif pour moduler les gradients de température à l'intérieur de la plaque amplificatrice, de telle sorte que la traversée de ladite plaque par le faisceau soit possible avec une déformation minimale de la surface d'onde incidente, donnant donc accès à un meilleur contrôle de la qualité optique dudit faisceau laser après amplification, en comparaison avec l'art antérieur.

On peut alors utiliser une plaque amplificatrice de grande épaisseur, et modulant les gradients locaux de température à l'intérieur de celle-ci pour obtenir une dégradation minimale de la qualité optique du faisceau laser après amplification.

On peut utiliser une plaque amplificatrice d'autant plus épaisse, que la dégradation de surface d'onde est fortement minimisée.

Une plaque amplificatrice épaisse offre une large section pour l'injection d'un faisceau laser à amplifier, permettant de générer des impulsions laser amplifiées à très haute énergie et dans un faisceau de haute qualité optique.

On peut notamment utiliser une plaque amplificatrice d'épaisseur variant de quelques mm à 1 cm pour générer des impulsions laser amplifiées dont l'énergie atteigne et dépasse 100 mJ, notamment une épaisseur supérieure à 2 mm.

Dans chaque système de contrôle de la température, l'au moins un élément de chauffage s'étend avantageusement au moins le long de deux bords opposés de la face supérieure, respectivement inférieure, ces bords opposés étant situés pour l'un du côté de la face latérale d'entrée et pour l'autre du côté de la face latérale de sortie.

De préférence, chaque système de contrôle de la température est sensiblement invariant par une rotation de 180° autour d'un axe orthogonal à la face supérieure de la plaque amplificatrice, chaque système de contrôle de la température présentant un taux de recouvrement supérieur à 90% avec ce même système de contrôle de la température tourné de 180° autour de cet axe.

L'épaisseur de la plaque amplificatrice peut être supérieure ou égale à 3 mm.

Dans chaque système de contrôle de la température, l'au moins un élément de chauffage peut présenter des faces arrondies, qui s'étendent au regard de l'élément de refroidissement.

Dans chaque système de contrôle de la température, l'au moins un élément de chauffage peut entourer entièrement l'élément de refroidissement.

Dans chaque système de contrôle de la température, l'élément de chauffage peut présenter une section non rectangulaire, dans un plan parallèle à la face supérieure de la plaque amplificatrice.

Avantageusement, le dispositif selon l'invention comprend en outre au moins une lentille externe qui s'étend en entrée, respectivement en sortie de la plaque amplificatrice, configurée pour compenser au moins partiellement l'effet d'une déformation thermo-mécanique des faces latérales d'entrée et de sortie de la plaque amplificatrice.

En particulier, le dispositif selon l'invention peut comprend en outre deux lentilles externes plan-cylindre, les axes des cylindres étant orthogonaux entre eux. En particulier, l'axe de cylindre de l'une des lentilles plan-cylindres peut être parallèle à l'axe (Ox), et l'axe de l'autre lentille plan-cylindre parallèle à l'axe (Oy), où les faces latérales d'entrée et de sortie mentionnées ci-avant s'étendent parallèles au plan (Oxy), en l'absence de déformation thermo-mécanique.

De préférence, la face supérieure, respectivement inférieure de la plaque amplificatrice, est recouverte directement par une couche dite bas indice, d'indice optique inférieur à l'indice optique moyen de la plaque amplificatrice, chaque couche bas indice étant recouverte directement par le système de contrôle de la température correspondant.

Selon un mode de réalisation avantageux, dans chaque système de contrôle de la température, l'au moins un élément de chauffage est alimenté par des moyens d'alimentation réglables, et les moyens d'alimentation réglables sont reliés à des moyens de pilotage configurés pour formuler une consigne de pilotage en fonction d'une mesure de surface d'onde et d'une consigne de déformation maximale.

Le dispositif selon l'invention peut comprendre en outre des moyens de repérage relativement à la plaque amplificatrice, configurés pour guider le positionnement du faisceau laser à amplifier de sorte qu'il se propage en ligne droite dans la plaque amplificatrice.

L'invention concerne également un système comprenant un dispositif selon l'invention, ainsi que des moyens de multiplexage, configurés pour multiplier un nombre de passages du faisceau laser à amplifier, dans la plaque amplificatrice.

Avantageusement, les moyens de multiplexage sont configurés pour mettre en oeuvre un multiplexage spatial du faisceau laser à amplifier, et comprennent deux réflecteurs disposés du côté de la face latérale d'entrée de la plaque amplificatrice, et deux réflecteurs disposés du côté de la face latérale de sortie de la plaque amplificatrice.

Les moyens de multiplexage peuvent être configurés pour mettre en oeuvre également un multiplexage en polarisation du faisceau laser à amplifier, et comprendre également une lame quart d'onde et un réflecteur, configurés pour doubler un nombre de passages du faisceau laser à amplifier dans la plaque amplificatrice.

L'invention couvre également un système comprenant un dispositif d'amplification laser selon l'invention, et une source d'émission du faisceau laser à amplifier, configurée pour que le faisceau laser à amplifier se propage en ligne droite dans la plaque amplificatrice, entre sa face d'entrée et sa face de sortie.

En variante, le système peut comprendre un dispositif d'amplification laser selon l'invention, et un logement configuré pour recevoir une source d'émission du faisceau laser à amplifier, et pour que le faisceau laser à amplifier se propage en ligne droite dans la plaque amplificatrice, entre sa face d'entrée et sa face de sortie.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés parmi lesquels :
- la figure 1 illustre un exemple de dispositif d'amplification laser selon l'art antérieur ;
- la figure 2 illustre un premier mode de réalisation d'un dispositif d'amplification laser selon l'invention, selon une vue en perspective ;
- la figure 3 illustre de façon schématique le dispositif de la figure 2, selon une vue en coupe ;
- les figures 4A à 4E illustrent différentes géométries possibles pour les systèmes de contrôle de la température selon l'invention, adaptées notamment à différentes répartitions du dépôt de la puissance de pompage et différentes répartitions des flux d'échange thermique par les faces latérales de la plaque;
- les figures 5A et 5B d'une part, et 6A et 6B d'autre part, illustrent un comparatif de la forme des surfaces isothermes obtenues dans la plaque amplificatrice d'un dispositif selon l'invention, en fonction de la géométrie du système de contrôle de la température ;
- les figures 7A à 7C illustrent la dépendance entre la puissance fournie par les éléments de chauffage selon l'invention, et la qualité de surface d'onde du faisceau laser amplifié ;
- la figure 8 illustre un deuxième mode de réalisation d'un dispositif d'amplification laser selon l'invention, selon une vue en perspective, mettant en oeuvre une boucle d'asservissement pour l'optimisation de la qualité optique du faisceau laser amplifié ;
- les figures 9A et 9B illustrent un troisième mode de réalisation d'un dispositif d'amplification laser selon l'invention, respectivement selon une vue en perspective et selon une vue en coupe, et comprenant une lentille externe de pré-compensation ; et
- la figure 10 illustre un exemple d'un système complet comprenant un dispositif d'amplification laser selon l'invention.

### EXPOSÉ DÉTAILLÉ DE MODES DE RÉALISATION PARTICULIERS

La figure 2 illustre un premier mode de réalisation d'un dispositif 200 d'amplification laser selon l'invention, selon une vue en perspective.

Le dispositif 200 comprend une plaque amplificatrice 210, formant un milieu amplificateur.

La plaque amplificatrice 210 peut être constituée d'un cristal, d'une céramique, ou éventuellement d'un verre, dopé(e) par exemple par des ions trivalents de terre rare. L'ion dopant est par exemple l'ion ytterbium Yb³⁺, typique des milieux laser à trois niveaux. En variante, l'ion dopant néodyme Nd³⁺, ou tout autre élément. En variante, la plaque amplificatrice forme un milieu actif à 4 niveaux.

Dans la suite, on considère par exemple que la plaque amplificatrice est en Yb³⁺ :YAG.

La plaque amplificatrice présente ici une forme de parallélépipède rectangle.

Elle présente une face latérale d'entrée, ou face d'entrée, pour l'entrée d'un faisceau laser à amplifier 300, une face latérale de sortie 212, ou face de sortie, du côté opposé, pour la sortie du faisceau laser à amplifier.

On parle de face d'entrée et de face de sortie, pour désigner les faces par lesquelles le faisceau laser à amplifier entre dans la plaque amplificatrice, puis en sort après s'être propagé en ligne droite à l'intérieur de celle-ci. Comme détaillé dans la suite, le faisceau laser à amplifier peut effectuer plusieurs passages successifs dans la plaque amplificatrice, et entrer de nouveau dans la plaque amplificatrice par la face dite de sortie, puis sortir de nouveau de la plaque amplificatrice par la face dite d'entrée.

Les faces d'entrée et de sortie 212 sont parallèles entre elles, ou sensiblement (à quelques degrés près, par exemple à +/- 2° près). Elles s'étendent ici dans des plans parallèles au plan (xy).

De préférence, elles sont traitées anti-reflet haut flux, à la longueur d'onde du faisceau laser à amplifier (autour de 1030 nm dans l'exemple considéré du Yb³⁺ :YAG).

La plaque amplificatrice comprend également une face supérieure et une face inférieure, recouvertes chacune d'un système de contrôle de la température respectif, décrit dans la suite.

De préférence, les faces supérieure et inférieure sont parallèles entre elles, ou sensiblement (à quelques degrés près), et orthogonales aux faces d'entrée et de sortie 212, ou sensiblement (à quelques degrés près, par exemple à +/- 2° près). Elles s'étendent ici dans des plans parallèles au plan (yz).

La plaque amplificatrice comprend deux autres faces opposées, dites faces transverses, dont l'une au moins forme une face dite de pompage, pour l'entrée d'un faisceau de pompe 400.

Le faisceau de pompe se propage ici dans la plaque amplificatrice selon un axe sensiblement orthogonal à cette face de pompage (à quelques degrés près), ici selon l'axe (y). De préférence, la puissance de pompe est répartie quasiment uniformément sur tout le volume de la plaque amplificatrice.

La face transverse, du côté opposé à la face de pompage, est orthogonale aux faces d'entrée et de sortie 212, et aux faces supérieure et inférieure. Elle s'étend ici dans un plan parallèle au plan (xz).

Cette face transverse présente préférentiellement, mais de manière non exclusive, un traitement anti-reflet à la longueur d'onde du faisceau laser à amplifier, et, dans le cas d'un pompage par la seule face de pompage, un traitement dichroïque pour recycler le faisceau de pompe, de type réflecteur à la longueur d'onde de la pompe (autour de 940 nm dans l'exemple considéré du Yb³⁺:YAG). Dans le cas d'un pompage par les deux faces transverses, (ces faces pouvant être symétriques par rapport au plan (xz)), les traitements des faces ne sont que de type anti-reflet et le dopage de la plaque est augmenté pour réduire la profondeur de pénétration d'un facteur deux.

La face de pompage peut être légèrement inclinée relativement au plan (Oxz), pour former une protection supplémentaire à l'égard de phénomènes d'émission spontanée amplifiée.

L'épaisseur E (selon l'axe (x)) de la plaque amplificatrice 210 est avantageusement égale ou supérieure à 3 mm, par exemple comprise entre 3 mm et 10 mm.

La largeur (selon l'axe(y)) de la plaque est comprise de préférence entre 20 et 50 mm.

Le rapport entre la largeur et l'épaisseur de la plaque amplificatrice est compris par exemple entre 3 et 15, par exemple 10.

Les dimensions de la plaque amplificatrice sont par exemple 5 mm d'épaisseur, 10 mm de longueur (selon l'axe(z)), et 25 mm de largeur.

Cette plaque amplificatrice offre potentiellement un gain optique compris entre 15 et 20 dB, et permet d'amplifier des impulsions de durée de l'ordre de la nanoseconde jusque dans la gamme 100 mJ.

La description de la plaque amplificatrice donnée ci-dessus correspond à son état au repos, en l'absence d'une déformation thermo-mécanique générée par le pompage optique du faisceau laser à amplifier, et les phénomènes possibles d'absorption parasite.

La face supérieure de la plaque amplificatrice est recouverte par un élément de refroidissement 231A, encadré par deux éléments de chauffage 232A, formant ensemble un système 230A de contrôle de la répartition spatiale de la température dans le volume de la plaque amplificatrice, nommé dans la suite, système de contrôle de la température.

De la même façon, la face inférieure de la plaque amplificatrice est recouverte par un élément de refroidissement 231B, encadré par deux éléments de chauffage 232B, formant ensemble un système de contrôle de la température 230B.

Dans l'exemple représenté en figure 2, chaque élément de refroidissement et chaque élément de chauffage s'étend selon toute la largeur (axe (y)) de la plaque amplificatrice, et ses dimensions sont invariantes selon cet axe de la largeur.

De préférence, mais de manière non exclusive, les éléments de refroidissement 231A, 231B sont constitués chacun par un bloc métallique, percé de part en part par un tunnel formant un circuit d'écoulement pour un liquide de refroidissement tel que de l'eau.

Les éléments de refroidissement 231A, 231B sont connus en soi, l'une des nouveautés résidant dans le fait qu'ils ne s'étendent chacun que sur une surface réduite de la face supérieure, respectivement inférieure de la plaque amplificatrice.

Chaque élément de refroidissement 231A, respectivement 231B, recouvre une région dite centrale de la face supérieure, respectivement inférieure de la plaque amplificatrice. La région est dite centrale car elle s'étend à mi-distance entre les faces d'entrée et de sortie de la plaque amplificatrice.

Chaque élément de refroidissement 231A, 231B est espacé des éléments de chauffage correspondant 232A, 232B par un gap d'environ 1 mm.

De préférence, chaque élément de chauffage est constitué par au moins une électrode chauffante.

L'élément de chauffage 232A, respectivement 232B, est formé ici par une électrode chauffante respective.

Les électrodes chauffantes 232A, 232B recouvrent ici plus de la moitié de la surface de la face supérieure, respectivement inférieure, de la plaque amplificatrice.

Les électrodes chauffantes 232A, respectivement 232B, recouvrent des régions périphériques de la face supérieure, respectivement inférieure de la plaque amplificatrice. Ces régions sont dites périphériques, car elles s'étendent le long des faces d'entrée et de sortie, et le cas échéant le long des faces transverses de la plaque amplificatrice.

Ici, une première électrode chauffante 232A, respectivement 232B, recouvre une région de la face supérieure, respectivement inférieure de la plaque amplificatrice, du côté de la face d'entrée. Une seconde électrode chauffante 232A, respectivement 232B, recouvre une région de la face supérieure, respectivement inférieure de la plaque amplificatrice, du côté de la face de sortie.

Ici, la face supérieure, respectivement inférieure de la plaque amplificatrice est recouverte directement par une couche à bas indice optique 220A, respectivement 220B, dite couche bas indice, elle-même recouverte directement par le système de contrôle de la température 230A, respectivement 230B.

Chaque couche bas indice 220A, 220B présente un indice optique inférieur à l'indice optique moyen de la plaque amplificatrice (que le pompage optique soit mis en oeuvre ou non, les gradients d'indice formés alors dans la plaque amplificatrice étant bien inférieurs à la différence d'indice avec la couche bas indice).

Cela permet de confiner le faisceau laser de pompe entre les faces supérieure et inférieure de la plaque amplificatrice, et évite un risque de couplage parasite de la pompe vers les parties métalliques des systèmes de contrôle de la température 230A, 230B.

Les couches bas indice 220A, 220B sont par exemple en saphir, déposé sous la forme d'une couche mince d'épaisseur à choisir.

En variante, le système de contrôle de la température 230A, 230B repose directement sur la face supérieure, respectivement inférieure de la plaque amplificatrice.

Selon l'invention, le système de contrôle de la température 230A et le système de contrôle de la température 230B sont symétriques, ou sensiblement symétriques l'un de l'autre, selon une symétrie orthogonale relativement à un plan *P* passant par la plaque amplificatrice.

Ici, le plan *P* passe par le centre de la plaque amplificatrice.

Ici, le plan *P* s'étend parallèle aux faces supérieure et inférieure de la plaque amplificatrice, définies par les axes (y) et (z) du repère (xyz).

La symétrie peut n'être pas parfaite, notamment du fait de l'angle d'inclinaison de la face de pompage.

Par exemple, un taux de recouvrement entre le système de contrôle de la température 230A, respectivement 230B, et son symétrique relativement au plan *P*, est supérieur à 90%, et même supérieur à 95% voire même 98%.

En outre, dans l'exemple représenté en figure 2 mais de manière non limitative, chaque système de contrôle de la température 230A, 230B, présente des dimensions sensiblement invariantes par une rotation de 180° autour d'un axe Δ orthogonal aux faces supérieure et inférieure de la plaque amplificatrice.

En particulier, un taux de recouvrement entre chaque système de contrôle de la température 230A, 230B, et ce même système de contrôle de la température tourné de 180° autour de l'axe Δ, est supérieur à 90%, et même supérieur à 95% voire même 98%. Ici, ce taux de recouvrement est de 100%.

On peut remarquer que la combinaison entre ces deux invariances (par une rotation autour de l'axe Δ, et par une symétrie orthogonale relativement au plan *P*), correspond dans le cas le plus typique à une symétrie centrale autour d'un point situé au centre géométrique de la plaque amplificatrice.

Le dispositif d'amplification selon l'invention est adapté à une propagation du faisceau laser 300 à amplifier, selon une ou plusieurs propagations en ligne droite dans la plaque amplificatrice, directement entre la face d'entrée et la face de sortie de la plaque amplificatrice, sans réflexion(s) intermédiaire(s) sur une autre face de la plaque amplificatrice. En particulier, le dispositif d'amplification selon l'invention est adapté à une propagation du faisceau laser à amplifier, selon un axe sensiblement orthogonal à la face d'entrée et/ou la face de sortie de la plaque amplificatrice (à quelques degrés près, par exemple +/- 2° près), par exemple selon l'axe (z).

Les éléments de refroidissement 231A, 231B permettent de refroidir la plaque amplificatrice 210, de préférence de manière symétrique par une rotation de 180° autour de l'axe Δ.

Ils permettent de réduire la température moyenne de la plaque amplificatrice, durant le pompage optique. On maintient ainsi l'intégrité du matériau et des interfaces optiques de la plaque amplificatrice, ainsi que l'intégrité d'éventuels collages ou soudages sur cette plaque. De préférence, les éléments de refroidissement 231A, 231B permettent de maintenir la température moyenne de la plaque amplificatrice inférieure à environ 450 K.

Les éléments de refroidissement 231A, 231B et électrodes chauffantes 232A, 232B, lorsqu'elles sont actionnées, permettent de modifier la forme des surfaces isothermes dans la plaque amplificatrice.

En d'autres termes, ils forment ensemble des moyens pour moduler localement une répartition de température, et donc d'indice optique, à l'intérieur de la plaque amplificatrice.

Ainsi, on peut ensuite exploiter cette nouvelle possibilité d'agir localement sur la forme des surfaces isothermes dans la plaque amplificatrice, pour conserver une grande qualité de faisceau après traversée de la plaque amplificatrice, en particulier pour un faisceau se propageant en ligne droite entre la face d'entrée et la face de sortie de la plaque amplificatrice.

On peut notamment agir localement sur la forme des surfaces isothermes dans la plaque amplificatrice, pour combattre les effets néfastes des gradients naturels dus au nécessaire refroidissement la plaque chauffée par ailleurs par le pompage optique.

La dégradation de la surface d'onde du faisceau laser amplifié est alors très fortement réduite ou annulée, même dans le cas d'une épaisseur de plaque amplificatrice suffisamment élevée pour laisser la place au développement de gradients locaux élevés. En effet, ces gradients locaux peuvent être modelés de sorte qu'ils ne dégradent pas la surface d'onde du faisceau laser à amplifier, voire même qu'ils corrigent au moins partiellement la déformation thermo-mécanique des faces d'entrée et sortie de la plaque amplificatrice.

En particulier, l'invention permet de contrôler localement la forme des gradients de température internes à la plaque amplificatrice, et de compenser les différences de températures qui s'y développent, selon chaque dimension de la plaque.

L'invention permet ainsi de propager la surface d'onde du faisceau laser amplifié, sans la déformer, à travers la plaque amplificatrice, et en dépit d'une épaisseur de plaque importante.

L'invention permet d'utiliser des plaques amplificatrices d'épaisseur élevée, notamment entre 3 mm et 10 mm, tout en obtenant une déformation minimale de la surface d'onde du faisceau laser amplifié.

L'invention est mise en oeuvre en combinaison avec une propagation en ligne droite du faisceau laser à amplifier, dans la plaque amplificatrice, entre la face d'entrée et la face de sortie. Cela permet en outre d'éliminer les défauts liés à des réflexions multiples sur les faces supérieure et inférieure refroidies, telles que décrites en introduction et en référence à la figure 1.

En particulier, les éléments de refroidissement et électrodes chauffantes peuvent être configurés ensemble pour qu'en fonctionnement, lorsque le faisceau laser à amplifier se propage en ligne droite dans la plaque amplificatrice, en faisant un ou plusieurs passages entre la face d'entrée et la face de sortie, la température moyenne des points de la plaque amplificatrice, intégrée selon l'axe de propagation du faisceau laser à amplifier dans la plaque amplificatrice, soit constante sur toute la surface d'onde de ce faisceau.

En d'autres termes, les systèmes de contrôle de la température peuvent permettre de corriger intégralement l'effet de la lentille thermo-optique, correspondant aux effets thermo-optiques naturellement induits dans la plaque amplificatrice.

En variante, ils peuvent être configurés ensemble pour que la température moyenne des points de la plaque amplificatrice, intégrée selon l'axe de propagation du faisceau laser à amplifier dans la plaque amplificatrice, corresponde à un indice optique moyen des points de la plaque amplificatrice, qui, intégré selon le même axe et pour chaque point de la surface d'onde du faisceau laser à amplifier, correspond à une lentille thermo-optique de forme connue.

Ainsi, les systèmes de contrôle de la température peuvent permettre de corriger au moins une partie de l'effet de la déformation thermo-mécanique des faces d'entrée et de sortie.

Par exemple, la répartition de températures permet que chaque point de la surface d'onde présente une différence de chemin optique maîtrisée entre l'entrée et la sortie de la plaque amplificatrice, qui compense entièrement les effets thermo-optiques et les effets thermo-mécaniques dans la plaque amplificatrice. Dans ce cas, le dispositif d'amplification selon l'invention ne comprend pas de lentille externe de pré-compensation.

Selon un autre exemple, la répartition de températures permet que chaque point de la surface d'onde parcoure un chemin optique maîtrisé entre l'entrée et la sortie de la plaque amplificatrice, qui compense entièrement les effets thermo-optiques et partiellement les effets thermo-mécaniques dans la plaque amplificatrice. Une ou plusieurs lentille(s) externe(s) de pré-compensation compense(nt) alors l'effet résiduel non corrigé de la déformation thermo-mécanique.

Le dispositif d'amplification selon l'invention peut être configuré pour être traversé plusieurs fois par le faisceau laser à amplifier, le chemin optique et l'intégration selon (z) étant alors considérés sur la somme des plusieurs traversées du faisceau laser à amplifier, depuis une première entrée dans la plaque amplificatrice jusqu'à une dernière sortie hors de la plaque amplificatrice.

En tout état de cause, on peut considérer que le dispositif d'amplification selon l'invention, comprenant le cas échéant une ou plusieurs lentille(s) externe(s) de pré-compensation, peut être configuré pour qu'un faisceau laser à amplifier incident, présentant une surface d'onde plane, présente en sortie du dispositif d'amplification selon l'invention une surface d'onde sensiblement plane, associée à une lentille thermique de focale la plus élevée possible.

Dans l'exemple représenté en figure 2, le faisceau laser à amplifier effectue un unique passage dans la plaque amplificatrice, en se propageant selon l'axe (z).

On suppose que l'effet thermo-mécanique est corrigé par une lentille externe dite de pré-compensation, non représentée en figure 2.

Après amplification dans la plaque amplificatrice, chaque point de la surface d'onde du faisceau laser amplifié s'est propagé parallèlement à l'axe (z), en passant, lors de la traversée de la plaque amplificatrice, par toute une série des points alignés selon l'axe (z), série de points à laquelle on peut associer une température moyenne donnée. Cette température moyenne fixe le chemin optique parcouru par le point considéré de la surface d'onde du faisceau amplifié. Les systèmes de contrôle de la température sont alors dimensionnés pour que ladite température moyenne soit la même pour chaque point de la surface d'onde du faisceau laser amplifié.

De manière plus générale, en considérant une surface (xy) propagée selon un ou plusieurs passages selon (z) dans la plaque amplificatrice, chaque point de la surface (xy) se propage dans la plaque selon une série de points alignés selon l'axe (z). On peut associer à cette série de points une température moyenne, qui est définie à l'issue de la propagation dans la plaque amplificatrice. Les systèmes de contrôle de la température peuvent être dimensionnés pour que chaque point de ladite surface soit associé à une même température moyenne.

En particulier, les éléments de refroidissement refroidissent la plaque amplificatrice à proximité de ses faces supérieure et inférieure, en formant des zones froides 301A, 301B situées au niveau d'une région centrale de la face supérieure, respectivement inférieure (voir figure 3).

Les éléments de chauffage permettent de former dans la plaque amplificatrice, de part et d'autre de chacune de ces zones froides 301A, 301B, des zones chaudes 302A, 302B situées au niveau de régions périphériques de la face supérieure, respectivement inférieure de la plaque amplificatrice (voir figure 3).

On peut ainsi compenser, à l'aide des éléments de chauffage, l'effet thermo-optique produit par le refroidissement combiné au pompage optique.

En d'autres termes, l'effet des zones froides formées par les éléments de refroidissement est compensé par des zones chaudes formées de part et d'autre de chaque zone froide par les éléments de chauffage. La température moyenne le long d'un chemin optique parallèle à (z) et passant par le centre de la plaque amplificatrice, peut alors être sensiblement égale à la température moyenne le long d'un chemin optique parallèle à (z) et passant par un bord de la plaque amplificatrice.

Ainsi, chaque point de la surface d'onde parcourt une même longueur de chemin optique entre l'entrée (juste après être entré dans la plaque) et la sortie de la plaque amplificatrice (juste avant de sortir de la plaque), de sorte qu'une surface d'onde n'est pas déformée lors de la traversée de la plaque amplificatrice (hors déformations liées aux déformations thermo-mécaniques des faces d'entrée et sortie).

Ainsi, on peut conserver une valeur nulle de la différence de chemin optique (ou OPD, pour l'anglais « *Optical Path Difference* ») entre deux points de la surface d'onde du faisceau laser amplifié.

L'activation des systèmes de contrôle de la température peut permettre en particulier d'aplanir les surfaces isothermes, qui s'étendent alors parallèles au plan (xy), pour améliorer la qualité optique du faisceau laser à amplifier.

Dans l'exemple illustré en figure 2 (et sur les autres figures également), on a représenté le cas particulier d'une plaque amplificatrice pompée par diodes selon une configuration transverse, le faisceau de pompage étant orienté de façon transverse, de préférence orthogonale, relativement à la direction de propagation du faisceau laser à amplifier.

A la figure 2, le faisceau de pompage est injecté par une unique face latérale de la plaque amplificatrice. En variante, des faisceaux de pompage peuvent être injectés par plusieurs faces latérales de la plaque amplificatrice, notamment deux faces latérales opposées, en particulier les deux faces transverses telles que décrites ci-avant.

En variante, le faisceau de pompe peut être injecté par la face d'entrée et/ou la face de sortie, de préférence incliné relativement au faisceau laser à amplifier. L'invention est donc associée préférentiellement à une configuration transverse, mais peut également s'appliquer à une géométrie de pompage longitudinale.

Comme précisé ci-avant, le dispositif d'amplification selon l'invention est adapté à une propagation du faisceau laser 300 à amplifier, selon une ou plusieurs propagations en ligne droite dans la plaque amplificatrice.

En pratique, le dispositif d'amplification peut comprendre des moyens de repérage dans l'espace, pour guider le positionnement d'une source laser d'émission du faisceau laser à amplifier de sorte que le faisceau laser à amplifier se propage en ligne droite dans la plaque amplificatrice.

Ces moyens de repérage, non représentés, peuvent comprendre des éléments tels qu'une mire ou une inscription sur un boîtier mécanique recevant le dispositif d'amplification.

De tels moyens sont bien connus dans le domaine des amplificateurs laser, pour aider à un centrage et un pointage optimaux d'un faisceau laser.

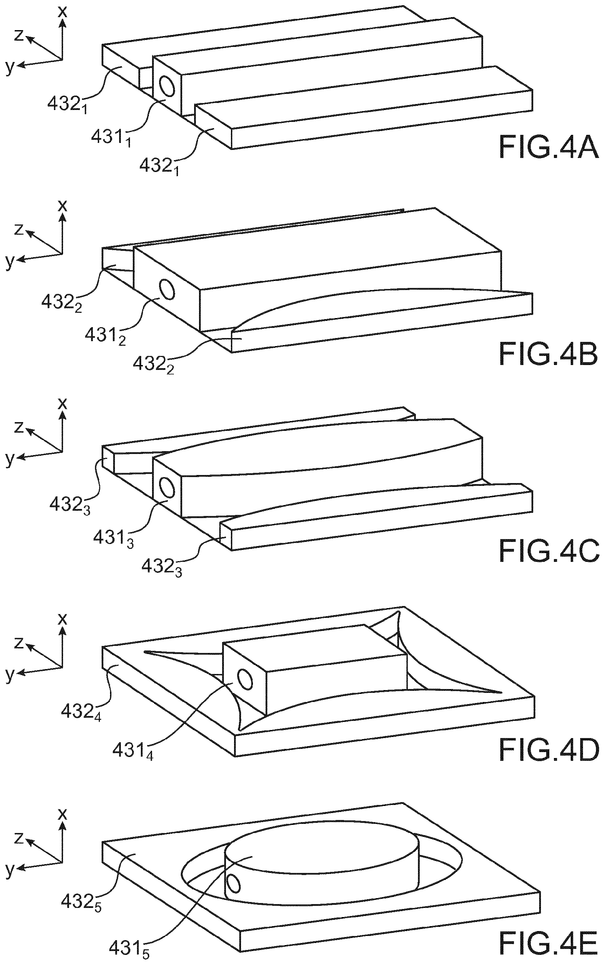

Les figures 4A à 4E illustrent différents exemples de géométries d'un système de contrôle de la température selon l'invention.

Chaque géométrie est caractérisée par la forme de l'élément de refroidissement, la forme de la ou les électrode(s) chauffante(s), et par leurs dimensions respectives.

Comme illustré sur les figures, chaque électrode présente la forme d'un cylindre dont la génératrice est parallèle à l'axe (x), et dont la base s'étend parallèle au plan (yz), c'est-à-dire parallèle aux faces supérieure et inférieure de la plaque amplificatrice.

A la figure 4A, le système de contrôle de la température est constitué d'un élément de refroidissement 431₁, en forme de parallélépipède rectangle, qui s'étend sur toute la largeur de la plaque amplificatrice.

De part et d'autre de l'élément de refroidissement 431₁ selon l'axe (z), s'étendent deux électrodes 432₁ symétriques l'une de l'autre. Chaque électrode présente une forme de parallélépipède rectangle, s'étendant sur toute la largeur de la plaque amplificatrice.

Chaque élément de refroidissement 431₁ et chaque électrode 432₁ présente des dimensions invariantes selon l'axe (y).

Les configurations suivantes ne sont pas uniformes selon l'axe (y), notamment pour prendre en compte les échanges thermiques qui ont lieu au niveau des faces transverses de la plaque amplificatrice, et/ou une répartition spatiale de la puissance de pompe non uniforme selon l'axe (y).

Sur la figure 4B, l'élément de refroidissement 431₂ présente une forme de parallélépipède rectangle, uniforme selon l'axe (y), qui s'étend sur toute la largeur de la plaque amplificatrice, et sur plus de la moitié de sa longueur.

Les électrodes 432₂ diffèrent des électrodes de la figure 4A en ce que leurs faces respectives, situées au regard de l'élément de refroidissement (parallèles à l'axe (x), donc orthogonales aux faces supérieure et inférieure de la plaque amplificatrice), sont de forme arrondie. En d'autres termes, ces faces s'étendent parallèles à l'axe (x), et présentent une courbure définie dans des plans orthogonaux à l'axe (x).

Cette forme arrondie est une forme bombée vers l'intérieur de la plaque amplificatrice, pour tenir compte de la présence de zones plus chaudes et plus difficiles à refroidir, au centre géométrique de ladite plaque.

En d'autres termes, les électrodes s'étendent plus ou moins profondément selon l'axe (z), en fonction de la position considérée selon l'axe (y).

Sur la figure 4C, l'élément de refroidissement 431₃ diffère de l'élément de refroidissement de la figure 4B en ce que ses faces situées au regard d'une électrode (parallèles à l'axe (x)) sont de forme arrondie.

Ces formes arrondies sont des formes bombées vers l'extérieur de la plaque amplificatrice, pour compenser plus encore les effets de la présence de zones plus chaudes au centre géométrique de ladite plaque.

Les électrodes 432₃ présentent également chacune une face bombée vers l'élément de refroidissement.

Là encore, il s'agit de faces parallèles à l'axe (x), présentant une courbure définie dans des plans orthogonaux à l'axe (x).

Sur la figure 4D, l'élément de refroidissement 431₄ présente une forme de parallélépipède rectangle, qui s'étend sur une partie seulement de la largeur de la plaque amplificatrice, et sur plus de la moitié de sa longueur.

La ou les électrodes 432₄ entoure(nt) entièrement l'élément de refroidissement 431₄, en longeant la face d'entrée, la face de sortie, et les deux faces transverses de la plaque amplificatrice (non représentée). Il peut s'agir d'une unique électrode, formée d'un seul tenant, ou d'un réseau d'électrodes.

On peut ainsi tenir compte des échanges thermiques qui ont lieu au niveau des faces transverses de la plaque amplificatrice.

Les faces de la ou des électrode(s) 432₄, situées au regard de l'élément de refroidissement, sont bombées vers l'élément de refroidissement, pour une efficacité de réchauffage plus grande autour d'un plan (xz) passant par le centre de la plaque amplificatrice.

Là encore, il s'agit de faces parallèles à l'axe (x), dont la forme non plane est définie dans des plans orthogonaux à l'axe (x).

Sur la figure 4E, l'élément de refroidissement 431₅ présente une forme de cylindre à base ovale, entouré par une électrode 432₅ en forme d'un parallélépipède rectangle percé par une ouverture ovale.

On peut ainsi tenir compte d'échanges thermiques intenses ayant lieu au niveau des faces transverses de la plaque amplificatrice.

La forme des électrodes peut être ajustée en fonction de l'effet recherché, les électrodes présentant une symétrie.

La géométrie optimale des éléments de refroidissement et des électrodes chauffantes dépend de la répartition de la charge thermique totale dissipée dans la plaque amplificatrice par le faisceau de pompe, et de la valeur de cette charge thermique.

Elle dépend également des conditions d'échange thermique aux limites sur les faces de la plaque amplificatrice, par exemple sur les faces transverses.

La recherche de la géométrie optimale correspond généralement à la recherche d'une lentille thermique globale, associée au dispositif d'amplification en fonctionnement, présentant une focale aussi longue que possible.

On voit donc que selon l'invention, les éléments de refroidissement peuvent présenter différentes sections dans un plan parallèle au plan (yz).

Chacun des modes de réalisation représentés aux figures 4A à 4E présente une symétrie, notamment une invariance par une rotation de 180° autour d'un axe (x). Des variantes non symétriques sont aussi possibles, par exemple pour tenir compte de répartitions du dépôt de la puissance de pompage non symétriques (qui varient par exemple au fur et à mesure que l'on s'éloigne de la face d'injection de la puissance de pompe).

De la même façon, la symétrie orthogonale relativement au plan *P*, n'est pas forcément parfaite, par exemple pour tenir compte de répartitions du dépôt de la puissance de pompage non parfaitement symétriques.

L'invention n'est pas limitée aux exemples illustrés ici, les éléments de refroidissement et les éléments de chauffage pouvant présenter des formes variées.

De la même façon, les éléments de refroidissement et les éléments de chauffage peuvent présenter des dimensions variées. Par exemple, chaque élément de chauffage peut recouvrir une fraction comprise entre 10% et 50% de la surface totale de la face supérieure, respectivement inférieure de la plaque amplificatrice.

La forme et les dimensions de chaque système de contrôle de la température d'un dispositif d'amplification selon l'invention peuvent être choisies en fonction de paramètres tels que la puissance de pompage, et le matériau constituant la plaque amplificatrice.

Le choix d'une forme donnée pour la géométrie du système de contrôle de la température permet de s'adapter à différentes répartitions spatiales de dépôt de la puissance de pompage, mais aussi à différentes répartitions des flux d'échange thermique par les faces latérales de la plaque.

L'invention peut comprendre un procédé d'ajustement de la forme des éléments de chauffage et de la forme des éléments de refroidissement, pour optimiser l'efficacité de la compensation des déformations de la surface d'onde du faisceau laser à amplifier.

De préférence, on cherche également à réduire l'élévation moyenne de température se développant dans la plaque amplificatrice.

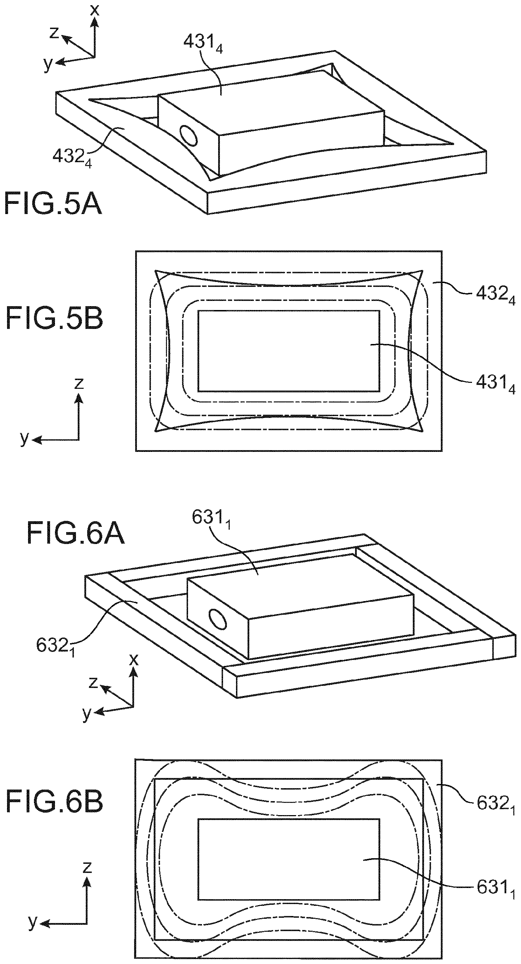

La variation d'efficacité de cette compensation est illustrée par la comparaison des figures 5A, 5B d'une part, et 6A, 6B d'autre part.

La figure 5A illustre un système de contrôle de la température reprenant la géométrie de la figure 4D.

La figure 5B illustre, selon une vue de dessus, une répartition des températures obtenue dans la plaque amplificatrice, à l'aide des systèmes de contrôle de température de la figure 5A.

On a représenté en pointillés les surfaces isothermes situées à la périphérie de la plaque, lorsque le système de contrôle de la température est en fonctionnement et lorsque le pompage optique du faisceau laser à amplifier est mis en oeuvre.

La puissance électrique fournie aux électrodes dans les conditions considérées est de 5 W, et une charge thermique totale de 20 W uniforme est dissipée dans la plaque amplificatrice, sous l'effet du pompage optique.

On voit que sur de grandes étendues à l'intérieur de la plaque amplificatrice, les gradients de température selon (y) sont rendus nuls.

Bien que cela n'apparaisse pas directement en figure 5B, les gradients de température selon (x) sont également rendus nuls sur de larges étendues à l'intérieur de la plaque amplificatrice. Ainsi, des surfaces isothermes sont rendues parallèles entre elles, selon le plan (xy), sur plus de la quasi-totalité de la largeur de la plaque amplificatrice.

Pour comparaison, le système de contrôle de la température de la figure 6A diffère de celui de la figure 5A en ce que les électrodes 632₁ ne présentent pas de faces bombées vers l'élément de refroidissement 631₁ (formes droites dans un plan (yz)).

La figure 6B illustre les résultats correspondants.

Dans ce cas particulier, pour le même niveau de puissance électrique fournie aux électrodes chauffantes, les surfaces isothermes présentent des formes fortement arrondies, qui ne s'étendent pas parallèles entre elles et ne sont pas parallèles au plan (xy).

On voit donc que la forme et la section des éléments de chauffage et des éléments de refroidissement, mais également leurs épaisseurs, et leurs conductivités thermiques, forment des paramètres d'ajustement de la répartition des gradients de température dans la plaque amplificatrice.

La géométrie optimale peut être sélectionnée par des simulations de températures dans la plaque amplificatrice et de déformation résultante de la surface d'onde du faisceau laser après amplification.

Après avoir défini une géométrie optimale des éléments de chauffage et des éléments de refroidissement, on définit aussi une puissance de chauffage optimale à générer au moyen des éléments de chauffage.

On considère que la chaleur émise par une électrode du système de contrôle de la température selon l'invention dépend de la puissance électrique qui lui est fournie.

Pour illustrer l'existence d'une valeur optimale de ladite puissance électrique, on se place par exemple dans le cas où la charge thermique apportée dans la plaque amplificatrice par le pompage optique est de 20 W, et où cette charge est uniformément répartie dans tout le volume de la plaque amplificatrice. On suppose aussi que la surface d'onde est parfaitement plane à l'entrée dans la plaque amplificatrice.

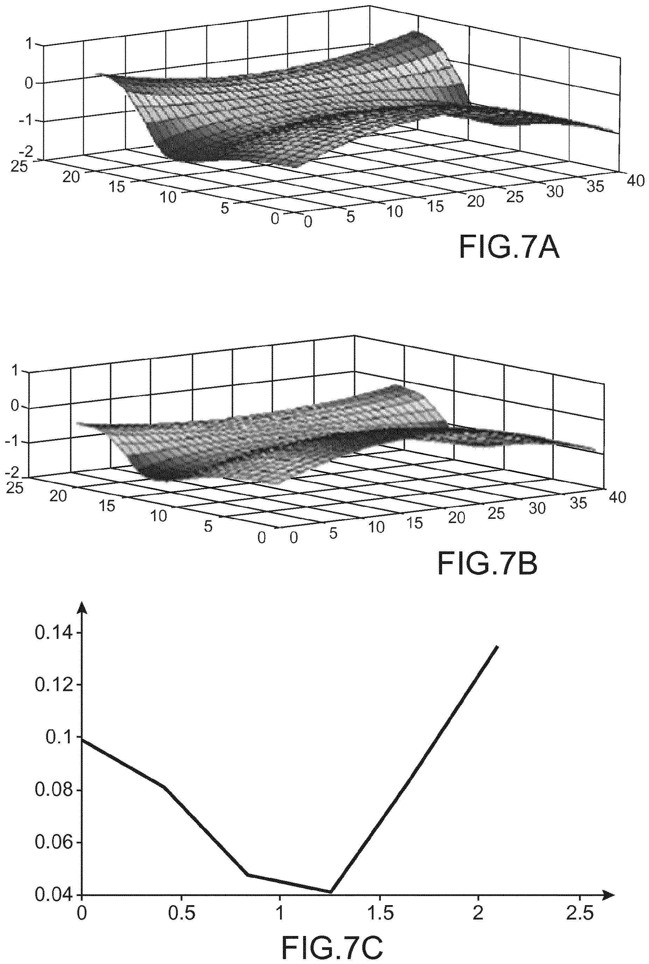

Sur la figure 7A, on a représenté la forme de la surface d'onde d'un faisceau laser amplifié, après un passage dans une plaque amplificatrice telle que décrite dans le dispositif de la figure 2, pour une épaisseur et une largeur de valeurs respectives 5 mm et 20 mm, et par exemple pour une puissance électrique de 2 W fournie aux électrodes.

Les axes horizontaux des figures 7A et 7B sont gradués en unités arbitraires, selon le plan vertical (xy) des figures précédentes, et contiennent les deux dimensions fixées par la largeur et l'épaisseur de la plaque.

L'axe des ordonnées est celui selon lequel la différence de chemin optique (OPD) est représentée, en µm, selon l'axe (z) des figures précédentes. La différence crête à crête de chemin optique, selon l'axe des ordonnées de la figure 7A, vaut environ 1,7 µm après amplification dans les conditions ici décrites.

Sur la figure 7B, la puissance électrique fournie aux électrodes est réduite à 1,3 W. La différence crête à crête de chemin optique correspondante est alors réduite d'un facteur environ 4, après amplification, à un niveau également très inférieur à celui naturellement généré dans la plaque avant activation des électrodes chauffantes.

Sur le graphique de la figure 7C, l'axe des abscisses est une puissance électrique fournie aux électrodes, exprimée en W, et l'axe des ordonnées est la moyenne quadratique de la différence de chemin optique caractérisant la déformation de la surface d'onde, en sortie de la plaque amplificatrice.

La figure 7C montre que la puissance de chauffage dissipée par les électrodes chauffantes constitue un paramètre de réglage optimum de la qualité du faisceau amplifié.

La figure 7C montre également l'existence d'une valeur optimale de la puissance thermique de chauffage, associée à une distorsion minimale de la surface d'onde après amplification.

Il existe une valeur optimale de la puissance électrique à fournir aux électrodes pour une géométrie donnée des éléments de refroidissement et des électrodes, permettant de minimiser la déformation de surface d'onde engendrée par les effets thermo-optiques et thermo-mécaniques à l'intérieur de la plaque amplificatrice.

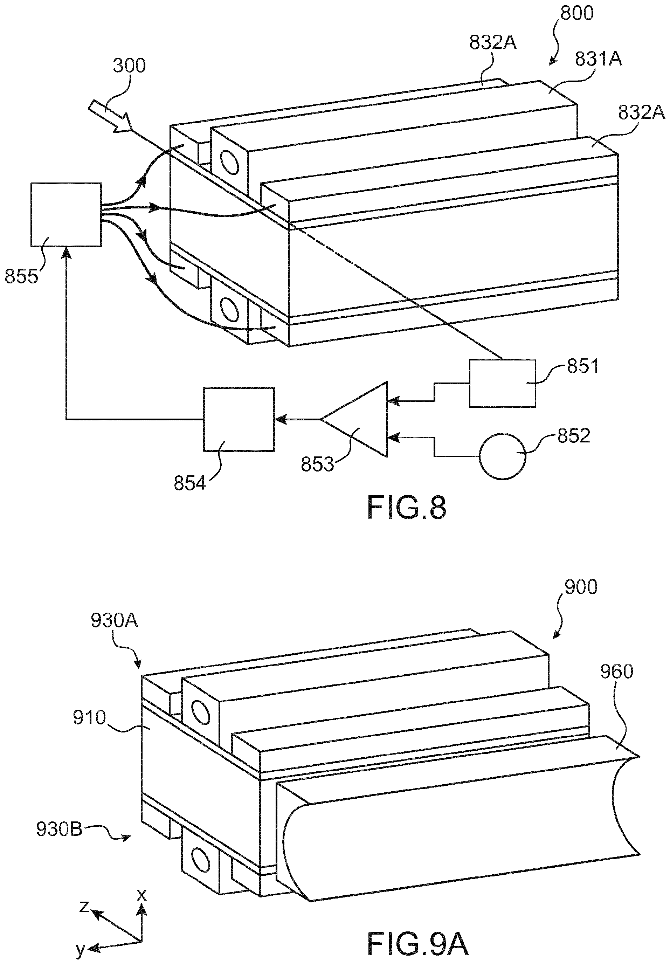

La figure 8 illustre ainsi un deuxième mode de réalisation d'un dispositif d'amplification laser 800 selon l'invention, selon une vue en perspective, pour l'automatisation du réglage de la puissance électrique optimale à fournir à chaque électrode chauffante.

Ce deuxième mode de réalisation ne sera décrit que pour ses différences relativement au mode de réalisation de la figure 2.

Les électrodes chauffantes 832A et 832B sont reliées à des moyens d'alimentation électrique 855, configurés pour fournir une puissance électrique d'alimentation à chaque électrode chauffante.

Ces moyens d'alimentation électriques 855 sont réglables, la puissance électrique qu'ils fournissent à chaque électrode chauffante étant fonction d'une consigne de pilotage qu'ils reçoivent.

Chaque électrode peut être alimentée par une valeur différente de puissance électrique.

La consigne de pilotage est fournie par des moyens de pilotage 854, par exemple un processeur. Elle est formulée en tenant compte du résultat d'une comparaison entre une consigne de déformation maximale de surface d'onde, et une mesure de la surface d'onde du faisceau laser amplifié, en sortie de la plaque amplificatrice.

La comparaison est mise en oeuvre par un comparateur 853, recevant en entrée la consigne 852 de déformation maximale, et la mesure de surface d'onde.

La consigne 852 de déformation maximale est une valeur fixe stockée dans une mémoire.

La mesure de surface d'onde est fournie par des moyens de mesure de surface d'onde 851. Elle est mise en oeuvre sur le faisceau laser amplifié, notamment sur un échantillon de celui-ci, prélevé par exemple à l'aide d'un miroir partiellement réfléchissant.

De préférence, la consigne de pilotage est adaptée pour maintenir la déformation de surface d'onde du faisceau laser amplifié à une valeur minimale.

On réalise ainsi une boucle d'asservissement.

On peut ainsi mettre en oeuvre un ajustement dynamique de la puissance électrique fournie aux électrodes, et donc de la puissance de chauffage émise par celles-ci, pour maintenir en permanence une qualité optique optimale du faisceau laser amplifié et prendre en compte des variations de la puissance laser.

La figure 9A illustre un troisième mode de réalisation d'un dispositif d'amplification laser 900 selon l'invention, selon une vue en perspective.

Ce troisième mode illustre une lentille externe de pré-compensation, telle que mentionnée précédemment.

Ce troisième mode de réalisation, associant la plaque amplificatrice à une lentille externe de pré-compensation des distorsions de la surface d'onde, est celui qui permet la plus grande finesse de contrôle en vue d'une annulation quasi-totale des déformations de surface d'onde après amplification.

Ce mode de réalisation ne sera décrit que pour ses différences relativement au mode de réalisation de la figure 2.

Selon ce mode de réalisation, une lentille externe 960, dite de de pré-compensation, s'étend à l'entrée ou à la sortie de la plaque amplificatrice, sur toute l'étendue de l'une de ses faces d'entrée ou sortie, pour compenser au moins certains des effets thermiques générés dans la plaque amplificatrice par le pompage optique.

Il s'agit de préférence d'une lentille plan-cylindre, généralement plan-concave (type de lentille principalement lié au coefficient de dilatation thermique du matériau de la plaque amplificatrice).

Elle coopère avec les systèmes de contrôle de la température 930A, 930B, pour compenser les effets thermiques engendrés par le pompage optique dans la plaque amplificatrice.

Ces effets thermiques comprennent les effets thermo-optiques liés à des répartitions de températures dans la plaque amplificatrice, et les effets thermo-mécaniques correspondant à la déformation mécanique des faces d'entrée et de sortie de la plaque amplificatrice sous l'action de la chaleur.

Par exemple, le pompage optique dans la plaque amplificatrice entraîne l'apparition d'une déformation mécanique de la face d'entrée (respectivement de sortie) dans sa zone centrale, d'une valeur crête à crête de 1,5 µm.

De préférence, on corrige la plus grande partie des déformations d'origine thermo-mécanique de manière statique, par cette lentille externe de pré-compensation, lentille dont la focale est alors de signe opposé à celle d'origine thermo-mécanique. Le rôle des systèmes de contrôle de la température devient, essentiellement, celui d'une compensation des effets thermo-optiques dans la plaque amplificatrice.

Dans certaines configurations, selon le matériau constituant la plaque et les conditions de fonctionnement, la lentille externe de pré-compensation 960 n'est pas nécessaire, les systèmes de contrôle de la température pouvant corriger intégralement la lentille thermo-optique et la lentille thermo-mécanique induites par le pompage optique dans la plaque amplificatrice.

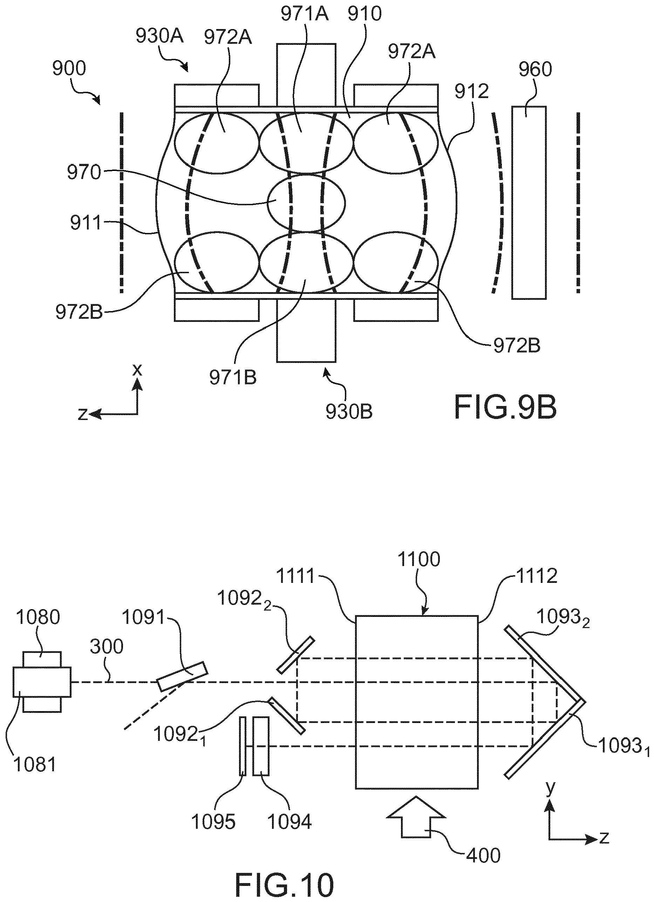

La figure 9B illustre le dispositif d'amplification laser 900 selon une vue en coupe dans un plan parallèle à (xz). Pour des raisons de lisibilité, l'épaisseur de la plaque amplificatrice est exagérée.

On a représenté en pointillé la surface d'onde du faisceau laser en cours d'amplification, à différentes étapes de la propagation dudit faisceau laser à l'intérieur de la plaque amplificatrice.

Les systèmes de contrôle de la température 930A, 930B sont actionnés, formant à l'intérieur de la plaque amplificatrice des régions refroidies 971A, 971B, sous les éléments de refroidissement, et des régions chauffées 972A, 972B, sous les électrodes chauffantes.

Le pompage optique est actionné, formant une région chauffée 970 au centre de la plaque amplificatrice.

En entrée de la plaque amplificatrice, la surface d'onde du faisceau laser à amplifier est supposée plane. Elle subit une déformation initiale liée à la déformation mécanique de la face d'entrée 911, puis une première série de déformations lors de sa propagation de la face d'entrée 911, jusqu'au centre de la plaque amplificatrice. Elle subit ensuite une seconde série de déformations lors de la propagation du centre de la plaque amplificatrice jusqu'à la face de sortie 912, sensiblement symétrique à la première série de déformations, puis une dernière déformation de sortie liée à la déformation thermo-mécanique de la face de sortie 912.

La surface d'onde du faisceau laser amplifié présente alors, en sortie de la plaque amplificatrice, une déformation résiduelle, qui est corrigée par la lentille 960.

De préférence, cette déformation résiduelle est délimitée dans l'espace par deux formes asphériques, ou deux formes cylindriques, définissant la forme de la lentille 960 sphérique ou cylindrique.

Selon une variante non représentée, la surface d'onde du faisceau laser amplifié présente, en sortie de la plaque amplificatrice, une déformation résiduelle définie par deux cylindres d'axes orthogonaux. Cette déformation est alors compensée par deux lentilles plan-cylindre, les axes des cylindres étant orthogonaux entre eux et situés dans un plan (xy).

En pratique, le dimensionnement du dispositif d'amplification selon l'invention peut mettre en oeuvre les étapes suivantes :
- pour une forme et des dimensions données de plaque amplificatrice, une répartition de la puissance de pompe donnée dans la plaque, et un chemin donné du faisceau laser à amplifier dans la plaque amplificatrice (un ou plusieurs passages, selon le gain souhaité), calcul de la composante thermo-mécanique et de la composante thermo-optique de la déformation de la surface d'onde du faisceau laser après amplification, en l'absence de chauffage par les éléments de chauffage ;
- si besoin, calcul de la focale d'une ou plusieurs lentille(s) externe(s) de pré-compensation ;
- optimisation, par des simulations, de la géométrie des éléments de chauffage et des éléments de refroidissement, pour minimiser le résidu de déformation de surface d'onde, après insertion de la lentille externe de pré-compensation ; et enfin
- optimisation de la puissance électrique fournie aux éléments de chauffage, pour minimiser la déformation de surface d'onde en prenant en compte l'effet de la lentille externe de pré-compensation et la géométrie sélectionnée des éléments de chauffage et de refroidissement.

On va maintenant décrire, en référence à la figure 10, un système complet 1000 d'amplification laser selon l'invention, comprenant un dispositif d'amplification laser selon l'invention 1100.

Le système est représenté de façon schématique, selon une vue de dessus.

Le système 1000 comprend un support 1080, ou logement, configuré pour recevoir la source laser 1081 d'émission du faisceau laser à amplifier.

Le support 1080 et le dispositif d'amplification laser 1100 sont positionnés l'un relativement à l'autre, de sorte que le faisceau laser à amplifier se propage en ligne droite dans la plaque amplificatrice, directement depuis sa face d'entrée 1111 jusqu'à sa face de sortie 1112, sans réflexion intermédiaire sur les faces supérieure et inférieure.

Le faisceau laser à amplifier se propage notamment selon une direction orthogonale aux faces d'entrée et sortie (considérées au repos, en l'absence de déformation thermo-mécanique). Cette incidence normale minimise l'effet des éventuelles aberrations optiques induites lors de la propagation dans la plaque amplificatrice.

La source laser 1081 peut faire partie intégrante du système d'amplification laser selon l'invention.

Afin d'augmenter le gain optique sur le faisceau laser à amplifier, le système 1000 comprend des moyens décrits ci-dessous, pour mettre en oeuvre plusieurs passages successifs du faisceau laser à amplifier, à travers la plaque amplificatrice et selon sa longueur.

Le faisceau laser à amplifier se propage parallèle à la même direction, à chacun de ses passages à travers la plaque amplificatrice.

Dans tout le texte, on nomme faisceau laser amplifié, le faisceau laser à amplifier, obtenu après amplification par l'ensemble des passage(s) à travers la plaque amplificatrice.

Le faisceau laser à amplifier 300, émis par la source laser 1081, polarisé p, traverse une lame séparatrice de polarisation 1091 inclinée à l'incidence qui convient, généralement 55 à 60 degrés, relativement au faisceau laser incident.

Cette lame séparatrice de polarisation 1091 transmet la polarisation p et réfléchit la polarisation s.

Le faisceau laser à amplifier se dirige ensuite vers le dispositif d'amplification laser 1100, selon une incidence normale à la face d'entrée 1111 de la plaque amplificatrice.

Il passe au travers d'une ouverture pratiquée dans un premier miroir dit en toit, constitué d'un couple de réflecteurs 1092₁, 1092₂ agencés à 90° l'un de l'autre, et inclinés chacun à 45° (à +/- 2° près) relativement à la face d'entrée de la plaque amplificatrice.

De l'autre côté de la plaque amplificatrice se trouve un second miroir en toit, constitué d'un autre couple de réflecteurs 1093₁, 1093₂.

Chacun des réflecteurs 1092₁, 1092₂, 1093₁, 1093₂ présente sa face réfléchissante du côté de la plaque amplificatrice.

De préférence, chacun des réflecteurs 1092₁, 1092₂, 1093₁, 1093₂ est incliné à 45° exactement relativement aux faces d'entrée et de sortie de la plaque amplificatrice, pour garantir une incidence normale du faisceau laser à amplifier, à chaque passage dans ladite plaque.

Ces quatre réflecteurs sont configurés ensemble pour que le faisceau laser à amplifier traverse plusieurs fois la plaque amplificatrice, en se propageant directement entre la face d'entrée et la face de sortie de ladite plaque.

Ainsi, le faisceau laser à amplifier traverse plusieurs fois la plaque amplificatrice de part en part, en se décalant selon l'axe (y) entre deux traversées, par réflexions successives sur les réflecteurs 1092₁, 1092₂, 1093₁, 1093₂.

Dans l'exemple représenté en figure 10, il traverse 4 fois la plaque amplificatrice.

Les réflecteurs 1092₁, 1092₂, 1093₁, 1093₂ sont agencés de sorte qu'à chacune de ces traversées, le faisceau laser à amplifier s'étende à l'intérieur de la plaque amplificatrice selon un volume distinct. De préférence, ces différents volumes ne sont pas superposés, mais juxtaposés, et occupent ensemble l'ensemble du volume de la plaque amplificatrice.

De la même façon, le faisceau de pompe s'étend avantageusement sur l'ensemble du volume de la plaque amplificatrice.

L'objectif est de maximiser le recouvrement spatial entre la zone d'absorption du faisceau de pompe et le faisceau laser à amplifier.

Après ces plusieurs traversées de la plaque amplificatrice, le faisceau laser traverse une lame quart d'onde 1094, puis est réfléchi sur un réflecteur 1095.

Le réflecteur 1095 est agencé orthogonal au faisceau laser incident, de sorte qu'il renvoie ce faisceau laser sur le même chemin optique.

Grâce à la lame quart d'onde 1094, le faisceau laser retournant vers la plaque amplificatrice présente une polarisation tournée de 90°, soit une polarisation s.

Le réflecteur 1095 et la lame quart d'onde 1094 sont configurés ensemble pour que le faisceau laser à amplifier traverse plusieurs fois la plaque amplificatrice en présentant une première polarisation, puis en présentant une seconde polarisation.

Le faisceau laser à amplifier effectue ainsi 4 nouvelles traversées de la plaque amplificatrice, cette fois avec la polarisation s.

En sortie, il forme le faisceau laser dit amplifié, qui se propage jusqu'à la lame séparatrice de polarisation 1091, sur laquelle il est réfléchi.

Le faisceau laser à amplifier est ainsi amplifié selon 8 passages successifs à travers la plaque amplificatrice.

La lame séparatrice de polarisation 1091, les réflecteurs 1092₁, 1092₂, 1093₁, 1093₂, la lame quart d'onde 1094 et le réflecteur 1095 forment ensemble des moyens de multiplexage du faisceau laser à amplifier. Ces moyens mettent en oeuvre ici un multiplexage spatial (les réflecteurs 1092₁, 1092₂, 1093₁, 1093₂) et un multiplexage en polarisation (lame quart d'onde 1094 et réflecteur 1095).

Par abus de langage, ces moyens sont nommés « moyens de multiplexage ». Il apparaît cependant de façon évidente, à la lecture du texte, que ces moyens visent à multiplier un nombre de passages dans la plaque amplificatrice, et non à séparer un signal en plusieurs signaux distincts.

De la même façon, par abus de langage, on désigne par le terme « multiplexage spatial », la multiplication d'un nombre de passages dans la plaque amplificatrice à l'aide de décalages spatiaux du faisceau laser.

De la même façon, par abus de langage, on désigne par le terme « multiplexage en polarisation », la multiplication d'un nombre de passages dans la plaque amplificatrice à l'aide de rotations de polarisation du faisceau laser.

La configuration illustrée en figure 10 donne accès à des gains compris entre 15 et 20 dB voire plus, selon le niveau initial de puissance ou d'énergie des impulsions du faisceau laser à amplifier.

Elle peut comprendre une lentille telle que décrite en référence aux figures 9A et 9B.

Cet exemple est celui, le plus typique et optimisé au regard des conditions de réalisation de l'invention, d'un amplificateur à passages multiples le long de la plaque amplificatrice équipée de ses éléments de refroidissement et de chauffage. L'architecture optique ici proposée permet d'exploiter de manière optimale les fonctionnalités de contrôle de la surface d'onde.

Sur la figure 10, on n'a pas représenté les moyens d'émission du faisceau laser de pompage.

Ces moyens d'émission peuvent faire partie intégrante du système selon l'invention.

Ces moyens d'émission sont configurés ici de sorte que le faisceau laser de pompage se propage selon l'axe (Oy), orthogonal à la direction de propagation du faisceau laser à amplifier.

En variante, ils peuvent être configurés de sorte que le faisceau laser de pompage se propage selon une autre direction, en étant injectés par une ou plusieurs faces latérales de la plaque amplificatrice.

Ces moyens d'émission sont configurés en outre de sorte que la puissance de pompe soit répartie de façon sensiblement homogène, et de préférence dans tout le volume de la plaque amplificatrice.

Ils sont formés par un panneau de pompe, constitué d'empilements de diodes en forme de barre agencées généralement en lignes et en colonnes.

Chaque diode contenue dans un empilement est collimatée selon son axe rapide.

Un ensemble de lentilles plan-cylindre de grandes dimensions s'étendant sur toute l'étendue du panneau de diodes met en oeuvre une collimation, puis une focalisation de l'ensemble des faisceaux émis par ces diodes.

Ce dispositif optique de pompage fournit la brillance requise sur la face d'injection de la pompe dans la plaque amplificatrice.

En amont de la face de pompage se trouve un homogénéiseur optique, implanté sur une ou plusieurs lame(s) peu absorbante(s), comportant des séries de motifs appropriés pouvant se présenter sous la forme de micro-lentilles, permettant d'éviter la présence de points chauds dans la plaque amplificatrice.

L'invention n'est pas limitée aux différents exemples décrits ci-avant, et de nombreuses variantes peuvent être mises en oeuvre sans sortir du cadre de la présente invention, notamment d'autres géométries pour les électrodes chauffantes.

Par exemple, chaque élément de chauffage peut être constitué d'une pluralité d'électrodes pouvant être chacune allumée ou éteinte indépendamment des autres, pour ajuster de façon dynamique la forme émettant de la chaleur, en fonctionnement.

Le dispositif d'amplification selon l'invention permet d'obtenir des impulsions laser dont les gammes de puissance moyenne et d'énergie par impulsion sont comprises entre quelques dizaines de W et 1 kW, respectivement entre 10 mJ et 1J.

L'invention permet notamment de conserver une section d'amplification élevée pour la production de fortes énergies avec un grand gain d'amplification, tout en maîtrisant la déformation de la surface d'onde du faisceau amplifié à l'aide d'un contrôle de la répartition spatiale de la charge thermique générée dans la plaque.

## Revendications

1. Dispositif (200 ; 800; 900; 1100) d'amplification laser, comprenant une plaque amplificatrice (210 ; 910) présentant une face latérale d'entrée (911 ; 111) et une face latérale de sortie (212 ; 912 ; 1112) pour un faisceau laser à amplifier (300), et dont les faces supérieure et inférieure sont chacune recouvertes d'un système de contrôle de la température respectif (230A, 230B ; 930A, 930B), **caractérisé en ce que** chaque système de contrôle de la température (230A ; 230B ; 930A ; 930B) comprend un élément de refroidissement (231A ; 231B ; 431₁ ; 431₂ ; 431₃ ; 431₄ ; 431₅ ; 631₁ ; 831A), recouvrant une région centrale de la face supérieure, respectivement inférieure de la plaque amplificatrice, et au moins un élément de chauffage (232A ; 232B ; 432₁ ; 432₂ ; 432₃ ; 432₄ ; 432₅ ; 632₁ ; 832A), recouvrant des régions périphériques de la face supérieure, respectivement inférieure de la plaque amplificatrice, et **en ce que** les systèmes de contrôle de la température (230A ; 230B ; 930A ; 930B) sont sensiblement symétriques l'un de l'autre, selon une symétrie orthogonale par rapport à un plan (*P*), ledit plan (*P*) étant un plan parallèle aux faces supérieure et inférieure de la plaque amplificatrice (210 ; 910) et passant par ladite plaque, et chaque système de contrôle de la température présentant un taux de recouvrement supérieur à 90% avec le symétrique de l'autre système de contrôle de la température.

2. Dispositif (200 ; 800 ; 900 ; 1100) selon la revendication 1, **caractérisé en ce que** chaque système de contrôle de la température (230A; 230B ; 930A; 930B) est sensiblement invariant par une rotation de 180° autour d'un axe (Δ) orthogonal à la face supérieure de la plaque amplificatrice (210 ; 910), chaque système de contrôle de la température présentant un taux de recouvrement supérieur à 90% avec ce même système de contrôle de la température tourné de 180° autour de cet axe.

3. Dispositif (200 ; 800 ; 900 ; 1100) selon la revendication 1 ou 2, **caractérisé en ce que** l'épaisseur (E) de la plaque amplificatrice (210 ; 910) est supérieure ou égale à 3 mm.

4. Dispositif selon l'une quelconque des revendications 1 à 3, **caractérisé en ce que** dans chaque système de contrôle de la température, l'au moins un élément de chauffage (432₂; 432₃; 432₄; 432₅) présente des faces arrondies, qui s'étendent, au regard de l'élément de refroidissement (431₂; 431₃; 431₄; 431₅), selon un axe (x) orthogonal aux faces supérieure et inférieure de la plaque amplificatrice.

5. Dispositif selon l'une quelconque des revendications 1 à 4, **caractérisé en ce que** dans chaque système de contrôle de la température, l'au moins un élément de chauffage (432₄ ; 432₅) entoure entièrement l'élément de refroidissement (431₄ ; 431₅).

6. Dispositif selon l'une quelconque des revendications 1 à 5, **caractérisé en ce que** dans chaque système de contrôle de la température, l'élément de chauffage (431₃ ; 431₅) présente une section non rectangulaire, dans un plan parallèle à la face supérieure de la plaque amplificatrice.

7. Dispositif (900) selon l'une quelconque des revendications 1 à 6, **caractérisé en ce qu'**il comprend en outre au moins une lentille externe (960) qui s'étend en entrée, respectivement en sortie de la plaque amplificatrice (910), configurée pour compenser au moins partiellement l'effet d'une déformation thermo-mécanique des faces latérales d'entrée et de sortie de la plaque amplificatrice.

8. Dispositif (200 ; 800 ; 900 ; 1100) selon l'une quelconque des revendications 1 à 7, **caractérisé en ce que** la face supérieure, respectivement inférieure de la plaque amplificatrice (210 ; 910), est recouverte directement par une couche (220A; 220B) dite bas indice, d'indice optique inférieur à l'indice optique moyen de la plaque amplificatrice, chaque couche bas indice étant recouverte directement par le système de contrôle de la température correspondant.

9. Dispositif (800) selon l'une quelconque des revendications 1 à 8, **caractérisé en ce que** dans chaque système de contrôle de la température, l'au moins un élément de chauffage (832A ; 832B) est alimenté par des moyens d'alimentation réglables (855), et **en ce que** les moyens d'alimentation réglables sont reliés à des moyens de pilotage (854), configurés pour formuler une consigne de pilotage en fonction du résultat d'une comparaison entre une consigne de déformation maximale de surface d'onde, et une mesure de surface d'onde sur un faisceau laser dit amplifié, en sortie de la plaque amplificatrice.

10. Dispositif (800) selon l'une quelconque des revendications 1 à 9, **caractérisé en ce qu'**il comprend en outre des moyens de repérage relativement à la plaque amplificatrice, configurés pour guider le positionnement du faisceau laser à amplifier (300) de sorte qu'il se propage en ligne droite dans la plaque amplificatrice.

11. Système (1000) comprenant un dispositif (1100) selon l'une quelconque des revendications 1 à 10, **caractérisé en ce qu'**il comprend en outre des moyens de multiplication de passages, configurés pour multiplier un nombre de passages du faisceau laser à amplifier, dans la plaque amplificatrice.

12. Système (1000) selon la revendication 11, **caractérisé en ce que** les moyens de multiplication de passages comprennent deux réflecteurs (1092₁, 1092₂) disposés du côté de la face latérale d'entrée de la plaque amplificatrice, et deux réflecteurs (1093₁, 1093₂) disposés du côté de la face latérale de sortie de la plaque amplificatrice.

13. Système (1000) selon la revendication 12, **caractérisé en ce que** les moyens de multiplication de passages comprennent également une lame quart d'onde (1094) et un réflecteur (1095), configurés pour doubler un nombre de passages du faisceau laser à amplifier dans la plaque amplificatrice.

## Patentansprüche

1. Laserverstärkungsvorrichtung (200; 800; 900; 1100), enthaltend eine Verstärkerplatte (210; 910) mit einer Eingangsseitenfläche (911; 111) und einer Ausgangsseitenfläche (212; 912; 1112) für einen zu verstärkenden Laserstrahl (300), deren Ober- und Unterseite jeweils mit einem Temperaturregelsystem (230A, 230B; 930A, 930B) überdeckt ist, **dadurch gekennzeichnet, dass** jedes Temperaturregelsystem (230A; 230B; 930A, 930B) ein Kühlelement (231A; 231B; 431₁; 431₂; 431₃; 431₄; 431₅; 631₁; 831A) enthält, das einen Mittelbereich der Ober- bzw. Unterseite der Verstärkerplatte überdeckt, sowie zumindest ein Heizelement (232A; 232B; 432₁; 432₂; 432₃; 432₄; 432₅; 632₁; 832A), das Umfangsbereiche der Ober- bzw. Unterseite der Verstärkerplatte überdeckt, und dass die Temperaturregelsysteme (230A; 230B; 930A; 930B) in einer Symmetrie orthogonal zur einer Ebene (P) im Wesentlichen symmetrisch zueinander sind, wobei die Ebene (P) eine Ebene ist, die parallel zu der Ober- und der Unterseite der Verstärkerplatte (210; 910) ist und durch die Platte verläuft, und wobei jedes Temperaturregelsystem eine Überdeckungsrate von mehr als 90% mit der Symmetrie des anderen Temperaturregelsystems aufweist.

2. Vorrichtung (200; 800; 900; 1100) nach Anspruch 1, **dadurch gekennzeichnet, dass** jedes Temperaturregelsystem (230A; 230B; 930A; 930B) bei einer Drehung um 180° um eine Achse (Δ) orthogonal zur Oberseite der Verstärkerplatte (210; 910) im Wesentlichen unveränderlich ist, wobei jedes Temperaturregelsystem eine Überdeckungsrate von mehr als 90% mit demselben um 180° um diese Achse gedrehten Temperaturregelsystem aufweist.

3. Vorrichtung (200; 800; 900; 1100) nach Anspruch 1 oder 2, **dadurch gekennzeichnet, dass** die Dicke (E) der Verstärkerplatte (210; 910) größer oder gleich 3 mm ist.

4. Vorrichtung nach einem der Ansprüche 1 bis 3, **dadurch gekennzeichnet, dass** bei jedem Temperaturregelsystem das zumindest eine Heizelement (432₂; 432₃; 432₄; 432₅) abgerundete Seiten aufweist, die sich dem Kühlelement (431₂; 431₃; 431₄; 431₅) gegenüberliegend entlang einer Achse (x) orthogonal zur Ober- und Unterseite der Verstärkerplatte erstrecken.

5. Vorrichtung nach einem der Ansprüche 1 bis 4, **dadurch gekennzeichnet, dass** bei jedem Temperaturregelsystem das zumindest eine Heizelement (432₄; 432₅) das Kühlelement (431₄; 431₅) vollständig umgibt.

6. Vorrichtung nach einem der Ansprüche 1 bis 5, **dadurch gekennzeichnet, dass** bei jedem Temperaturregelsystem das Heizelement (431₃; 431₅) einen nicht rechteckigen Querschnitt in einer Ebene parallel zur Oberseite der Verstärkerplatte aufweist.

7. Vorrichtung (900) nach einem der Ansprüche 1 bis 6, **dadurch gekennzeichnet, dass** sie ferner zumindest eine äußere Linse (960) enthält, die sich am Eingang bzw. Ausgang der Verstärkerplatte (910) erstreckt und dazu ausgelegt ist, zumindest teilweise den Effekt einer thermomechanischen Verformung der Eingangs- und der Ausgangsseitenfläche der Verstärkerplatte auszugleichen.

8. Vorrichtung (200; 800; 900; 1100) nach einem der Ansprüche 1 bis 7, **dadurch gekennzeichnet, dass** die Ober- bzw. Unterseite der Verstärkerplatte (210; 910) direkt mit einer sogenannten Niederindex-Schicht (220A; 220B) überdeckt ist, deren optischer Index niedriger als der optische Mittelwertindex der Verstärkerplatte ist, wobei jede Niederindex-Schicht direkt mit dem entsprechenden Temperaturregelsystem überdeckt ist.

9. Vorrichtung (800) nach einem der Ansprüche 1 bis 8, **dadurch gekennzeichnet, dass** bei jedem Temperaturregelsystem das zumindest eine Heizelement (832A; 832B) über einstellbare Versorgungsmittel (855) versorgt wird und dass die einstellbaren Versorgungsmittel mit Steuermitteln (854) verbunden sind, die dazu ausgelegt sind, eine Steuervorgabe in Abhängigkeit von dem Ergebnis eines Vergleichs zwischen einer maximalen Verformungsvorgabe der Wellenoberfläche und einer Messung der Wellenoberfläche an einem verstärkten Laserstrahl am Ausgang der Verstärkerplatte zu bilden.

10. Vorrichtung (800) nach einem der Ansprüche 1 bis 9, **dadurch gekennzeichnet, dass** sie ferner Mittel zum Lokalisieren in Bezug auf die Verstärkerplatte enthält, die dazu ausgelegt sind, um die Positionierung des zu verstärkenden Laserstrahls (300) so zu führen, dass er sich in einer geraden Linie in der Verstärkerplatte ausbreitet.

11. System (1000), enthaltend eine Vorrichtung (1100) nach einem der Ansprüche 1 bis 10, **dadurch gekennzeichnet, dass** es ferner Mittel zum Vervielfachen von Durchgängen enthält, die dazu ausgelegt sind, um eine Anzahl von Durchgängen des zu verstärkenden Laserstrahls in der Verstärkerplatte zu vervielfachen.

12. System (1000) nach Anspruch 11, **dadurch gekennzeichnet, dass** die Mittel zum Vervielfachen von Durchgängen zwei Reflektoren (1092₁, 1092₂) enthalten, die auf der Seite der Eingangsseitenfläche der Verstärkerplatte angeordnet sind, sowie zwei Reflektoren (1093₁, 1093₂), die auf der Seite der Ausgangsseitenfläche der Verstärkerplatte angeordnet sind.

13. System (1000) nach Anspruch 12, **dadurch gekennzeichnet, dass** die Mittel zum Vervielfachen von Durchgängen auch ein Viertelwellenplättchen (1094) und einen Reflektor (1095) enthalten, die dazu ausgelegt sind, eine Anzahl von Durchgängen des zu verstärkenden Laserstrahls in der Verstärkerplatte zu verdoppeln.

## Claims

1. A laser amplification device (200; 800; 900; 1100), comprising an amplifying slab (210; 910) having an inlet side face (911; 111) and an outlet side face (212; 912; 1112) for a laser beam to be amplified (300), and the upper and lower faces of which are each covered with a respective temperature control system (230A, 230B; 930A, 930B), **characterised in that** each temperature control system (230A; 230B; 930A; 930B) comprises a cooling element (231A; 231B; 431₁; 431₂; 431₃; 431₄; 431₅; 631₁; 831A), covering a central region of the upper, respectively lower face of the amplifying slab, and at least one heating element (232A; 232B; 432₁; 432₂; 432₃; 432₄; 432₅; 632₁; 832A), covering peripheral regions of the upper, respectively lower face of the amplifying slab, and **in that** the temperature control systems (230A; 230B; 930A; 930B) are substantially symmetrical to each other, according to an orthogonal symmetry with respect to a plane (*P*), said plane (*P*) being a plane parallel to the upper and lower faces of the amplifying slab (210; 910) and passing through said slab, and each temperature control system having a coverage rate higher than 90% with the symmetric one of the other temperature control system.

2. The device (200; 800; 900; 1100) according to claim 1, **characterised in that** each temperature control system (230A; 230B; 930A; 930B) is substantially invariant by a rotation of 180° about an axis (Δ) orthogonal to the upper face of the amplifying slab (210; 910), each temperature control system having a coverage rate higher than 90% with this same temperature control system rotated by 180° about this axis.

3. The device (200; 800; 900; 1100) according to claim 1 or 2, **characterised in that** the thickness (E) of the amplifying slab (210; 910) is higher than or equal to 3mm.

4. The device according to any of claims 1 to 3, **characterised in that** in each temperature control system, the at least one heating element (432₂; 432₃; 432₄; 432₅) has rounded faces, which extend, in front of the cooling element (431₂; 431₃; 431₄; 431₅), along an axis (x) orthogonal to the upper and lower faces of the amplifying slab.

5. The device according to any of claims 1 to 4, **characterised in that** in each temperature control system, the at least one heating element (432₄; 432₅) fully surrounds the cooling element (431₄; 431₅).

6. The device according to any of claims 1 to 5, **characterised in that** in each temperature control system, the heating element (431₃; 431₅) has a non-rectangular cross-section, in a plane parallel to the upper face of the amplifying slab.

7. The device (900) according to any of claims 1 to 6, **characterised in that** it further comprises at least one outer lens (960) which extends at the inlet, respectively at the outlet of the amplifying slab (910), configured to compensate at least partially for the effect of a thermo-mechanical deformation of the inlet and outlet side faces of the amplifying slab.

8. The device (200; 800; 900; 1100) according to any of claims 1 to 7, **characterised in that** the upper, respectively lower face of the amplifying slab (210; 910), is directly covered with a so-called low index layer (220A; 220B), with an optical index lower than the mean optical index of the amplifying slab, each low index layer being directly covered with the corresponding temperature control system.

9. The device (800) according to any of claims 1 to 8, **characterised in that** in each temperature control system, the at least one heating element (832A; 832B) is supplied with adjustable supply means (855), and **in that** the adjustable supply means are connected to driving means (854), configured to generate a driving set point as a function of the result of a comparison between a wave surface maximum deformation set point, and a wave surface measurement on a so-called amplified laser beam, at the outlet of the amplifying slab.

10. The device (800) according to any of claims 1 to 9, **characterised in that** it further comprises register means for registering relative to the amplifying slab, configured to guide the positioning of the laser beam to be amplified (300) such that it propagates as a straight line in the amplifying slab.

11. A system (1000) comprising a device (1100) according to any of claims 1 to 10, **characterised in that** it further comprises passage multiplying means, configured to multiply a number of passages of the laser beam to be amplified, in the amplifying slab.

12. The system (1000) according to claim 11, **characterised in that** the passage multiplying means comprise two reflectors (1092₁, 1092₂) disposed on the side of the inlet side face of the amplifying slab, and two reflectors (1093₁, 1093₂) disposed on the side of the outlet side face of the amplifying slab.

13. The system (1000) according to claim 12, **characterised in that** the passage multiplying means also comprise a quarter wave plate (1094) and a reflector (1095), configured to double a number of passages of the laser beam to be amplified in the amplifying slab.
